# DEMANDE DE BREVET EUROPEEN

(11) **EP 4 116 082 A1**
(43) Date de publication de la demande: **11.01.2023**
(21) Numéro de dépôt: 22183198.5
(22) Date de dépôt: 05.07.2022
(51) Int. Cl.: B32B 7/12, B32B 27/08, B32B 27/28

(54) **PIÈCE EN MATÉRIAU COMPOSITE THERMOPLASTIQUE COMPRENANT AU MOINS UNE COUCHE D ACCROCHE À BASE D AU MOINS UNE RÉSINE THERMOPLASTIQUE AMORPHE**

(30) Priorité: 08.07.2021 FR 2107414
(71) Demandeur: AIRBUS OPERATIONS (S.A.S.), 31060 Toulouse (FR)
(72) Inventeur: PETIOT, Emilie, 31060 TOULOUSE (FR)
(74) Mandataire: Fantin, Laurent

(57) **Abrégé**

L'invention a pour objet une pièce comprenant un corps (26) présentant une première surface (26.1) et une matrice en résine thermoplastique semi-cristalline, un revêtement (28) recouvrant au moins partiellement la première surface (26.1) ainsi qu'une couche de protection contre la foudre (34) comportant une matrice (38), positionnée contre la surface (26.1), entre le corps (26) et le revêtement (28), caractérisée en ce que la matrice (38) de la couche de protection contre la foudre (34) est à base d'au moins une résine thermoplastique amorphe.

## Description

La présente demande se rapporte à une pièce en matériau composite thermoplastique comprenant au moins une couche d'accroche à base d'au moins une résine thermoplastique amorphe.

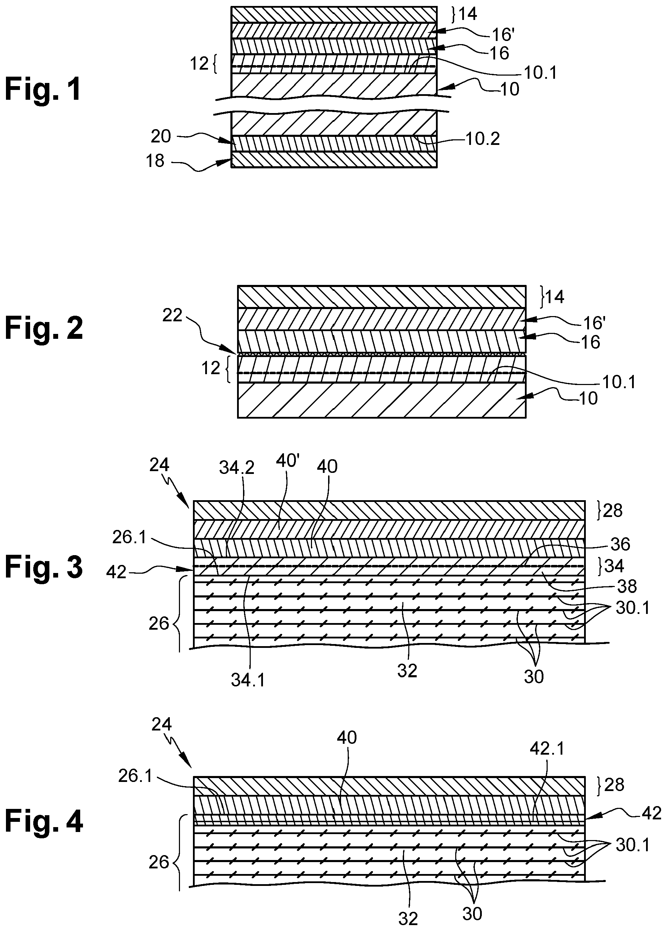

Selon un mode de réalisation illustré sur la figure 1, une paroi d'un fuselage d'aéronef comprend un corps 10 présentant une première surface 10.1 orientée vers l'extérieur du fuselage ainsi qu'une deuxième surface 10.2 orientée vers l'intérieur du fuselage. Ce corps 10 est réalisé en matériau composite thermodurcissable et comprend des fibres noyées dans une matrice de résine thermodurcissable.

Selon une configuration, la paroi comprend une couche de protection contre la foudre 12 dite couche LSP (pour Lightning Strike Protection en anglais) rapportée sur la première surface 10.1. Cette couche de protection contre la foudre 12 comporte une grille métallique noyée dans une matrice en résine thermodurcissable.

La paroi du fuselage comprend également une couche de peinture 14 rapportée sur la couche de protection contre la foudre 12. Pour favoriser l'accroche de cette couche de peinture 14, la paroi du fuselage comprend au moins une couche primaire 16 intercalée entre la couche de protection contre la foudre 12 et la couche de peinture 14. Selon un mode de réalisation visible sur la figure 1, la paroi du fuselage comprend deux couches primaires 16, 16' entre la couche de protection contre la foudre 12 et la couche de peinture 14.

Certaines zones de la deuxième surface 10.2 sont recouvertes d'une couche de peinture de protection 18. Pour favoriser l'accroche de cette couche de peinture de protection 18, la paroi du fuselage comprend au moins une couche primaire 20 intercalée entre la deuxième surface 10.2 du corps 10 et la couche de peinture de protection 18.

Selon un mode de réalisation illustré sur la figure 2, le corps 10 de la paroi du fuselage est réalisé en matériau composite thermoplastique. En complément, la couche de protection contre la foudre 12 comprend une matrice en résine thermoplastique.

Dans ce cas, il est nécessaire de réaliser une étape de préparation de surface avant l'étape d'application de la couche primaire 16 afin d'accroître la mouillabilité 22 de la couche de protection contre la foudre 12 pour favoriser l'accroche de la couche primaire 16. De plus, il est nécessaire d'utiliser une couche primaire 16 à base de solvant.

Ce mode de réalisation pour les pièces en matériau composite thermoplastique n'est pas satisfaisant car l'étape de préparation de surface est relativement longue et augmente significativement le coût des pièces. De plus, elle n'est pas adaptée à des pièces de grandes dimensions Enfin, l'utilisation d'une couche primaire à base de solvant présente un impact négatif sur l'environnement.

La présente invention vise à remédier à tout ou partie des inconvénients de l'art antérieur. A cet effet, l'invention a pour objet une pièce comprenant un corps présentant une première surface et une matrice en résine thermoplastique semi-cristalline, un revêtement recouvrant au moins partiellement la première surface ainsi qu'une couche de protection contre la foudre comportant une matrice, positionnée contre la première surface, entre le corps et le revêtement, caractérisée en ce que la matrice de la couche de protection contre la foudre est à base d'au moins une résine thermoplastique amorphe.

Grâce à la matière de la matrice de la couche de protection contre la foudre, il n'est plus nécessaire de préparer la surface sur laquelle est appliquée la couche primaire ou le revêtement pour augmenter sa mouillabilité et, ainsi, l'accroche desdites couches. Un simple nettoyage est suffisant. Cette matière permet également de pouvoir utiliser une couche primaire et/ou un revêtement à base aqueuse.

Selon une autre caractéristique, la couche de protection contre la foudre comprend une première face orientée vers le corps, une deuxième face opposée à la première face ainsi qu'une épaisseur correspondant à une dimension prise entre les première et deuxième faces. Selon une première variante, une partie de l'épaisseur de la couche de protection contre la foudre, s'étendant à partir de la deuxième face, est en résine thermoplastique amorphe ou en un mélange d'au moins une résine thermoplastique amorphe et d'au moins une résine thermoplastique semi-cristalline.

Selon une deuxième variante, la couche de protection contre la foudre est réalisée sur toute son épaisseur en une résine thermoplastique amorphe ou en un mélange d'au moins une résine thermoplastique amorphe et d'au moins une résine thermoplastique semi-cristalline.

Selon une autre caractéristique, le corps comprend au niveau de la première surface, une matrice en résine thermoplastique amorphe ou en un mélange d'au moins une résine thermoplastique amorphe et d'au moins une résine thermoplastique semi-cristalline.

Selon une autre caractéristique, la pièce comprend un film, distinct de la couche de protection contre la foudre, en résine thermoplastique amorphe ou en un mélange d'au moins une résine thermoplastique amorphe et d'au moins une résine thermoplastique semi-cristalline.

Selon une autre caractéristique, le mélange d'au moins une résine thermoplastique amorphe et d'au moins une résine thermoplastique semi-cristalline comprend au moins 50% en poids de résine thermoplastique amorphe.

Selon une autre caractéristique, la pièce comprend au moins une couche primaire à base aqueuse intercalée entre la couche de protection contre la foudre et le revêtement. L'invention a également pour objet un aéronef comprenant une pièce selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une coupe d'une partie d'une pièce en matériau composite thermodurcissable illustrant un mode de réalisation de l'art antérieur,
- La figure 2 est une coupe d'une partie d'une pièce en matériau composite thermoplastique illustrant un mode de réalisation de l'art antérieur,
- La figure 3 est une coupe d'une partie d'une pièce en matériau composite thermoplastique illustrant un mode de réalisation de l'invention, et
- la figure 4 est une coupe d'une partie d'une pièce en matériau composite thermoplastique illustrant un mode de réalisation de l'invention.

Selon un mode de réalisation illustré par la figure 4, une pièce 24 comprend un corps 26 présentant une première surface 26.1 ainsi qu'un revêtement 28, comme une couche de peinture ou une couche de peinture de protection par exemple, recouvrant au moins partiellement la première surface 26.1. De préférence, ce revêtement 28 est une couche de peinture à base aqueuse.

Selon une application, la pièce 24 est une paroi d'un aéronef. Bien entendu, l'invention n'est pas limitée à cette application.

Le corps 26 est en matériau composite thermoplastique et présente des fibres 30 noyées dans une matrice 32 de résine thermoplastique.

Selon une configuration, les fibres 30 se présentent sous forme de plis de fibres 30.1 superposées. A titre d'exemple, les fibres 30 sont en carbone.

Selon un mode de réalisation, la résine thermoplastique est une résine thermoplastique semi-cristalline. A titre d'exemple, la résine est choisie parmi les polyétheréthercétones (PEEK), les polyaryléthercétones (PAEK), les polyéthercétonecétones (PEKK) ou les polysulfures de phénylène (PPS).

Les pièces 24 comportant un corps 26 en matériau composite thermoplastique ont notamment pour avantage de permettre de réaliser des liaisons entre les pièces par soudage, contrairement à celles réalisées en matériau composite thermodurcissable.

Selon un mode de réalisation, la pièce 24 comprend une couche de protection contre la foudre 34, dite couche LSP (pour Lightning Strike Protection en anglais), positionnée sur la première surface 26.1 du corps 26. Selon un mode de réalisation, cette couche de protection contre la foudre 34 comprend au moins une grille, un grillage, un métal déployé ou une feuille perforée métallique 36, en cuivre ou en bronze par exemple, noyée dans une matrice 38.

La couche de protection contre la foudre 34 comprend une première face 34.1 orientée vers le corps 26 ainsi qu'une deuxième face 34.2, opposée à la première face 34.1, orientée vers le revêtement 28.

Selon une configuration, la pièce 24 comprend au moins une couche primaire 40, appliquée sur la deuxième face 34.2 de la couche de protection contre la foudre 34, intercalée entre cette dernière et le revêtement 28. Selon une configuration visible sur la figure 3, la pièce 24 comprend deux couches primaires 40, 40'.

Selon un mode de réalisation, au moins une couche primaire 40, 40' ou chaque couche primaire 40, 40' est une couche primaire à base de solvant.

Selon un autre mode de réalisation, au moins une couche primaire 40, 40' ou chaque couche primaire 40, 40' est une couche primaire à base aqueuse. Ce type de couche primaire permet de réduire l'impact sur l'environnement.

Selon un premier mode de réalisation, la matrice 38 de la couche de protection contre la foudre 34 est réalisée en une résine thermoplastique amorphe ou en un mélange d'au moins une résine thermoplastique amorphe et d'au moins une résine thermoplastique semi-cristalline. Selon une configuration, la résine thermoplastique amorphe est choisie parmi les polyétherimides (PEI), les polyethersulfures (PES) ou autres.

L'utilisation d'une résine thermoplastique amorphe permet d'obtenir une accroche satisfaisante entre la couche de protection contre la foudre 34 et la couche primaire 40 sans qu'il ne soit nécessaire de réaliser une étape de préparation de la deuxième surface 34.2. De plus, ce type de résine permet de pouvoir utiliser une couche primaire 40 à base aqueuse.

La couche de protection contre la foudre 34 présente une épaisseur correspondant à une dimension prise entre les première et deuxième faces 34.1, 34.2. Selon une variante, la couche de protection contre la foudre 34 est réalisée, sur toute son épaisseur, en une résine thermoplastique amorphe ou en un mélange d'au moins une résine thermoplastique amorphe et d'au moins une résine thermoplastique semi-cristalline. Selon une autre variante, seulement une partie de l'épaisseur de la couche de protection contre la foudre 34, s'étendant à partir de la deuxième face 34.2, est en résine thermoplastique amorphe ou en un mélange d'au moins une résine thermoplastique amorphe et d'au moins une résine thermoplastique semi-cristalline. Selon un mode de réalisation, avant sa consolidation, la couche de protection contre la foudre 34 présente un film de résine thermoplastique amorphe au niveau de sa deuxième face 34.2.

Selon un deuxième mode de réalisation, la matrice 38 de la couche de protection contre la foudre 34 est une résine thermoplastique compatible avec la résine de la matrice 32 du corps 26. Selon une configuration, les matrices 32, 38 du corps 26 et de la couche de protection contre la foudre 34 sont réalisées à partir de la même résine, comme une résine thermoplastique semi-cristalline.

Selon ce deuxième mode de réalisation, la pièce 24 comprend un film de résine thermoplastique amorphe intercalé entre la couche de protection contre la foudre 34 et la couche primaire 40.

Selon un autre mode de réalisation visible sur la figure 4, la couche primaire 40 ou le revêtement 28 est en contact avec la surface 26.1 du corps 26. Selon ce mode de réalisation, la pièce 24 comprend une couche ou un film de résine thermoplastique amorphe 42 intercalé entre la surface 26.1 du corps 26 et la couche primaire 40. Cette couche de résine thermoplastique amorphe 42 peut comprendre un pli de renfort 42.1.

En variante, une partie de l'épaisseur du corps 26, s'étendant à partir de la surface 26.1, est en résine thermoplastique amorphe ou en un mélange d'au moins une résine thermoplastique amorphe (PEI) et d'au moins une résine thermoplastique semi-cristalline (PEEK, PAEK,...). Selon un mode de réalisation, avant sa consolidation, le corps 26 comprend un pli de fibres 30.1 positionné au niveau de la surface 26.1, ce pli de fibres 30.1 étant préimprégné d'une résine thermoplastique amorphe ou d'un mélange d'au moins une résine thermoplastique amorphe (PEI) et d'au moins une résine thermoplastique semi-cristalline (PEEK, PAEK,...). En variante, le corps 26 comprend, avant sa consolidation, un film de résine thermoplastique amorphe positionné au niveau de la surface 26.1.

Bien entendu, l'invention n'est pas limitée à ces modes de réalisation. Ainsi, la pièce 24 pourrait ne comprendre aucune couche primaire 40, le revêtement 28 étant appliqué directement sur le corps 26 ou la couche de protection contre la foudre 34.

Quel que soit le mode de réalisation, la pièce 24 comprend au moins une couche support en un matériau comportant une matrice en résine thermoplastique parmi un corps 26 de la pièce 24 et une couche de protection contre la foudre 34, au moins une couche d'application recouvrant au moins partiellement la couche support, comme un revêtement 28 ou une couche primaire 40, ainsi qu'au moins une couche d'accroche 42 comportant une matrice à base d'au moins une résine thermoplastique amorphe positionnée au niveau d'une interface reliant la couche support et la couche d'application.

Selon une première variante, la couche d'accroche 42 est distincte de la couche support, à savoir du corps 26 ou de la couche de protection contre la foudre 34. Selon une autre variante, la couche d'accroche 42 est incorporée à la couche support, à savoir au corps 26 ou à la couche de protection contre la foudre 34.

Selon certains cas, la matrice de la couche d'accroche 42 comprend une unique résine thermoplastique amorphe. Selon d'autres cas, la matrice de la couche d'accroche 42 comprend un mélange d'au moins une résine thermoplastique amorphe et d'au moins une résine thermoplastique semi-cristalline, la résine thermoplastique amorphe représentant au moins 50% en poids du mélange de résines.

Selon un mode réalisation, la couche d'accroche 42 comprend au moins un pli de renfort 42.1, notamment en fibres de carbone, de verre ou autres.

Cette couche d'accroche 42 présente d'excellentes propriétés d'adhésion. Par conséquent, grâce à cette couche d'accroche 42, il n'est plus nécessaire de préparer la surface sur laquelle est appliquée la couche primaire 40 ou le revêtement 28 pour augmenter sa mouillabilité et, ainsi, l'accroche desdites couches. Un simple nettoyage est suffisant. Cette couche d'accroche 42 permet également de pouvoir utiliser une couche primaire 40 et/ou un revêtement 28 à base aqueuse.

Selon d'autres avantages, les procédés de fabrication de l'art antérieur peuvent être utilisés pour réaliser le corps 26 et la couche de protection contre la foudre 34 de la pièce 24. De même, les procédés d'application de l'art antérieur peuvent être utilisés pour déposer les différents revêtements 28 et couches primaires 40, 40'.

## Revendications

1. Pièce comprenant un corps (26) présentant une première surface (26.1) et une matrice en résine thermoplastique semi-cristalline, un revêtement (28) recouvrant au moins partiellement la première surface (26.1) ainsi qu'une couche de protection contre la foudre (34) comportant une matrice (38), positionnée contre la première surface (26.1), entre le corps (26) et le revêtement (28), **caractérisée en ce que** la matrice (38) de la couche de protection contre la foudre (34) est à base d'au moins une résine thermoplastique amorphe.

2. Pièce selon la revendication précédente, **caractérisée en ce que** la couche de protection contre la foudre (34) comprend une première face (34.1) orientée vers le corps (26), une deuxième face (34.2) opposée à la première face (34.1) ainsi qu'une épaisseur correspondant à une dimension prise entre les première et deuxième faces (34.1, 34.2) et **en ce qu'**une partie de l'épaisseur de la couche de protection contre la foudre (34), s'étendant à partir de la deuxième face (34.2), est en résine thermoplastique amorphe ou en un mélange d'au moins une résine thermoplastique amorphe et d'au moins une résine thermoplastique semi-cristalline.

3. Pièce selon la revendication 1, **caractérisée en ce que** la couche de protection contre la foudre (34) comprend une première face (34.1) orientée vers le corps (26), une deuxième face (34.2) opposée à la première face (34.1) ainsi qu'une épaisseur correspondant à une dimension prise entre les première et deuxième faces (34.1, 34.2) et **en ce que** la couche de protection contre la foudre (34) est réalisée sur toute son épaisseur en une résine thermoplastique amorphe ou en un mélange d'au moins une résine thermoplastique amorphe et d'au moins une résine thermoplastique semi-cristalline.

4. Pièce selon l'une des revendications précédentes, **caractérisée en ce que** le corps (26) comprend au niveau de la première surface (26.1), une matrice en résine thermoplastique amorphe ou en un mélange d'au moins une résine thermoplastique amorphe et d'au moins une résine thermoplastique semi-cristalline.

5. Pièce selon l'une des revendications précédentes, **caractérisée en ce que** la pièce comprend un film, distinct de la couche de protection contre la foudre (34), en résine thermoplastique amorphe ou en un mélange d'au moins une résine thermoplastique amorphe et d'au moins une résine thermoplastique semi-cristalline.

6. Pièce selon l'une des revendications 2 à 5, **caractérisée en ce que** le mélange d'au moins une résine thermoplastique amorphe et d'au moins une résine thermoplastique semi-cristalline comprend au moins 50% en poids de résine thermoplastique amorphe.

7. Pièce selon l'une des revendications 1 à 6, **caractérisée en ce que** la pièce comprend au moins une couche primaire (40) à base aqueuse intercalée entre la couche de protection contre la foudre (34) et le revêtement (28).

8. Aéronef comprenant une pièce selon l'une des revendications précédentes.
